Europäisches Patentamt

European Patent Office

Office européen des brevets

(11) Publication number: **0 320 899**
**A2**

(19)

# EUROPEAN PATENT APPLICATION

(21) Application number: 88120881.3

(51) Int. Cl.⁴: **H02G 3/04**

(22) Date of filing: **14.12.88**

(30) Priority: **18.12.87 GB 8729569**

(43) Date of publication of application:
**21.06.89 Bulletin 89/25**

(84) Designated Contracting States:
**AT BE CH DE ES FR GB GR IT LI LU NL SE**

(71) Applicant: **SWIFTS OF SCARBOROUGH LIMITED**
**Cayton Low Road**
**Eastfield Scarborough YO11 3BY(GB)**

(72) Inventor: **Gregory, Edwin Stuart**
**6, Barleycroft Filey Road**
**Scarborough YO11 3AR(GB)**

(74) Representative: **Denmark, James**
**5 York Place**
**Leeds LS1 2SD Yorkshire(GB)**

(54) Improvements relating to cable tray systems.

(57) The system for moulding cables comprises a cable tray and at least one accessory. The cable tray has flanges with equally spaced apertures therein, and the accessory has tongues to overlap the flanges, said tongues having slots which are such as to overlap at least two apertures in the flanges regardless of the position of the tongues along the length of the flanges.

EP 0 320 899 A2

## Improvements Relating to Cable Tray Systems.

This invention relates to cable tray systems, and in particular concerns cable tray arrangements for the jointing of the ends of cable trays to cable tray accessories, or other cable tray lengths.

A cable tray comprises basically an elongated member of U-shaped cross-section comprising a base and side flanges. The side flanges may be single flanges in which case the flange edges project away from the base, in which case they are referred to as non-return flanges, or they may be return flanges in which case they are turned inwardly so that the edges of the flanges face the inner surface of the base.

To couple the ends of such cable trays together, or more particularly to couple the ends of such cable trays to what are knows as cable tray accessories, it is known to use separate wrap around coupling pieces which overlap the tray ends or tray end and accessory, or flat box coupling pieces which fit under the joint and the coupling pieces, trays and accessories are provided with apertures through which fixing bolts can be passed in order to connect the cable tray ends together or the cable tray end to cable tray accessory.

A cable tray accessory may be for example a short coupling section of the same section as the cable tray, a cable tray bend, or a cable tray reducer, T-junction or cross connector accessory, or a cable tray riser.

Of the cable tray to be connected to another cable tray end or an accessory, it is usual to provide fixing apertures in the flanges only at the end of the cable tray, with the result that if the cable tray is cut to provide a cable tray of reduced length, as is frequently required in specific installations, and if the flanges have to be connected to the connection pieces, then fresh holes must be drilled in the flanges to adapt the new end for connection to the connection piece. Cable tray coupling pieces do have diagonal slots on the portions which underlie the bases of the cable trays and accessories, and these inclined slots enable the coupling pieces to be connected, via apertures in the bases if the cable trays to the ends of cut cable trays, but the installer still has to cope with connecting the separate coupling piece.

The present invention seeks to provide a system whereby the coupling of cable tray ends, or the coupling of a cable tray end to an accessory, is considerably facilitated.

Facilitating this connection is of significant commercial importance, because frequently cable tray installations are performed in buildings having limited space, or the cable trays may be installed at an elevated height so that workmen requiring to assemble the installations must be capable of performing same quickly and easily. If workmen are required to position the cable trays and accessories, cut same to length, reposition same, fit coupling pieces, cut holes in the tray flanges, then clearly some installations may take considerable time. Also, there is a risk that the workmen through laziness will not perform all of the tasks completely, and the cable trays will not be installed in a satisfactory manner.

In accordance with the present invention, in a cable tray system, at least one cable tray length is provided with evenly pitched apertures in the flanges thereof, and either (i) another cable tray to be connected to said one cable tray is provided with extension tongues for overlapping the cable tray flanges of said first cable tray and having apertures in said tongues to enable the connection of the tongues to the flanges by means of bolts, or (ii) a cable tray accessory is provided with extension tongues for overlapping the flanges of said at least one cable tray and said tongues having apertures therein to enable the connection of the tongues to the flanges by the passing of bolts therethrough, characterised in that the apertures in the tongues are slots dimensioned and arranged such that if the said at least one cable tray is cut to length, regardless of where the cut is made, the slots will still overlap apertures in the flanges of said at least one cable tray, enabling at least one bolt and preferably two bolts to be passed through each overlapping tongues and flanges for the fixing of same together.

Preferably, each tongue has a single elongated slot which is of sufficient length to span three apertures in the flange to which it is to be connected whereby regardless of the position of the tongue longitudinally in relation to the flange, it will span two apertures in the flange enabling two bolts to be passed through the tongue and flange for the fixing of the tongue to the flange.

Where an accessory is provided and is adapted at two locations to be connected to respective ends of two cable trays having said apertures in the flanges thereof, at each of said locations, the accessory will have said tongues.

At each of said locations also, the accessory may have a base plate extension which is adapted to lie under the base of a cable tray connected to said location, said base plate extension having apertures which can register with apertures in the base of the cable tray, enabling the securement of said base extension to the base of the cable tray by the passage of bolts through said apertures.

The accessory preferably has a base plate and side flanges, the tongues being integral with said side flanges. The base extension plate when provided preferably is displaced out of the plane of the accessory base plate.

The cable tray(s) and/or accessory preferably will be formed in metal such as galvanised steel, although the invention is not to be considered as being limited to the utilisation of any particular material for the cable tray components.

It will be seen that by virtue of the invention, the installer's work is much simplified insofar as if the cable tray has to be cut to a length, it will still be readily connectible to the end of another cable tray provided with tongues, or to an accessory, without any further machining of the cable tray flanges.

Embodiments of the invention will now be described, by way of example, with reference to the accompanying drawings, wherein:-

Fig. 1 is a plan view showing a junction for the cable trays which are connected to a T-junction accessory;

Fig. 2 shows in perspective elevation how one of the cable trays is connected to said accessory;

Figs. 3 and 4 show respectively and in side elevation part of the accessory shown in Fig. 1 and 2 on its own, and when fitted to the end of the tray, the figures being to an enlarged scale; and

Figs. 5 and 6 show (similar to Figs. 3 and 4) a modified form of accessory and cable tray.

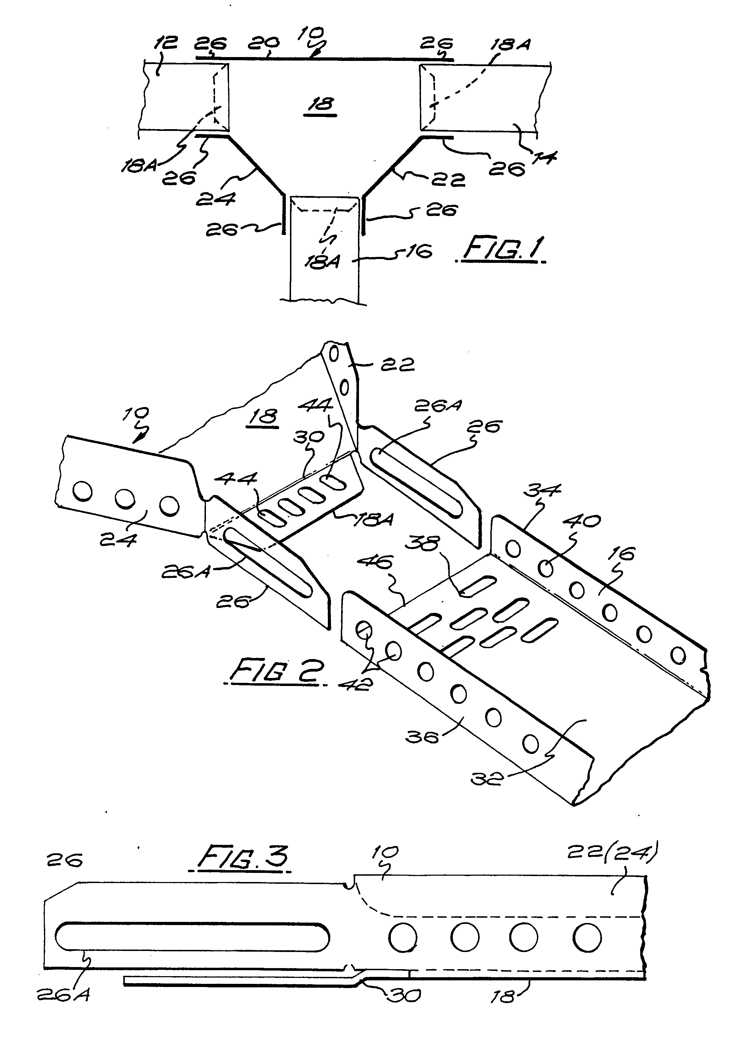

Referring to the drawings, and firstly to Figs. 1 and 2, a cable tray accessory 10 is shown in Fig. 1, and is of the T-connector type for coupling the cable trays 12, 14 and 16. Accessories such as the one shown in Fig. 1 are the subject of the co-pending European Patent Application 88117711.7 the content of which is included herein by reference thereto.

The accessory 10 has a base plate 18 and flanges 20, 22 and 24 which lie at right angles to the base 18. The flanges have extension tongues 26 which overlap flanges of the cable trays 12, 14 and 16 for the coupling of said cable trays to the accessory 10.

Finally, the base plate 18 is provided with base plate extensions 18A which are in fact joggled downwardly out of the plane of the base plate 18, so as to lie to the underside of the adjacent cable tray 12, 14 or 16 to provide an additional means for coupling the cable tray to the accessory.

The coupling of the cable tray to the accessory is best explained with reference to Fig. 2 which shows a portion of the accessory 10, its base plate 18 and the flanges 22 and 24. Also shown are the tongues 26 which extend from said flanges 22 and 24 as shown, and finally between the flanges there is indicated one of said base plate extensions 18A.

There are two of said tongues 26 arranged so as to lie parallel to each other and the extension 18A lies at right angles to the tongues as shown and the extension 18A is joggled as indicated at 30 out of the plane of the base plate 18. The end of the cable tray 16 to be connected to the accessory is also shown, and it will be seen that the cable tray comprises a base 32 and side flanges 34 and 36. As will be appreciated, the end of the cable tray 16 fits between the tongues 26 and the base 32 overlies the extension 18A when the cable tray is fully in position (as shown in Fig. 4).

In the base 16, the cable tray is provided with fixing apertures 38, whilst the flanges 34 and 36 are provided with fixing apertures 40 and 42.

The tongues 26 are provided with slots 26A whilst the extension base plate 18A has fixing apertures 44.

To fix the cable tray 16 to the accessory 10, it is simply a matter of inserting the end of the cable tray until the edge 46 of base 32 abuts the joggling 30. The slots 26A in this position will overlap the apertures 40, 42 enabling bolts to be passed therethrough and tightened for the fixing of the flanges 34 and 36 to the tongues 26A, and the apertures 44 will overlap the apertures 38 enabling the extension 18A to be fixed to the base 32 also be means of bolts (shown at 33 in Fig. 4).

The present invention arranged that the slots 26A are of such length as to overlap the apertures 40 and 42 and in particular two of said apertures, and this is achieved even if the tray 16 is cut transversely to a shorter length, regardless of where the cut is made. Therefore if the tray 16 is cut transversely in order to fit a particular space in a particular installation, the positioning of the cut end of the tray against the joggling 30 will result in that the slots 26A overlap at least two apertures 40, 42 in the tray flanges enabling a pair of bolts to be passed through the slots and apertures for the secure fixing of the flanges to the tongues.

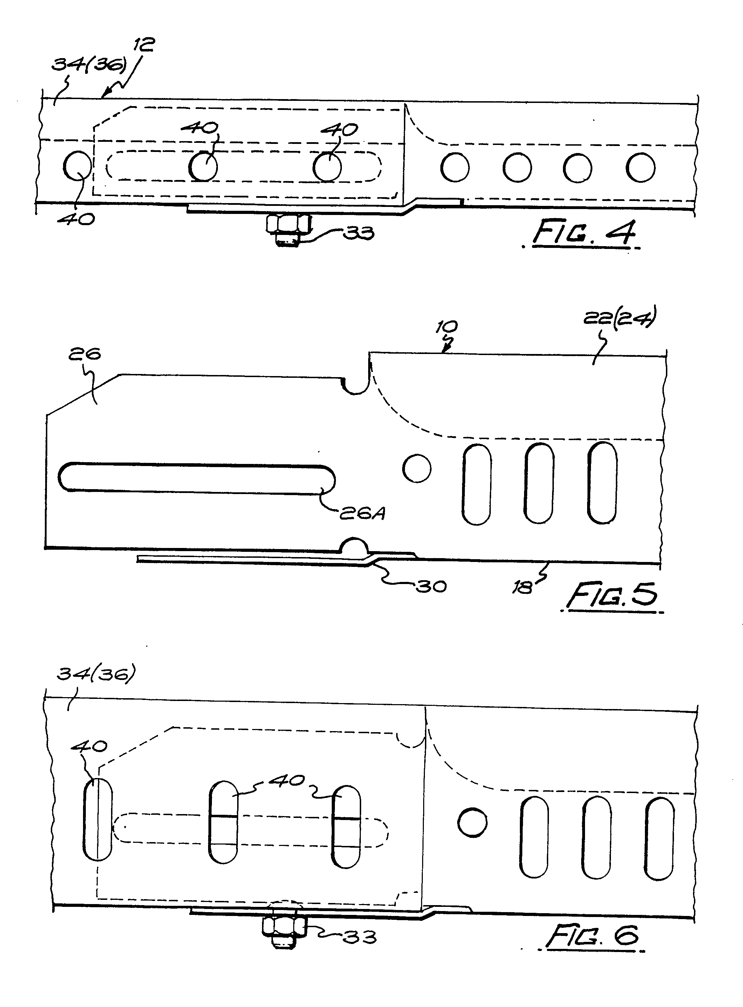

This arrangement is achieved by appropriately dimensioning the slots 26A and pitching the apertures 40 and 42, so that in an optimum position the slots 26A span three of said apertures, which ensures that the slot will always open at least two apertures. The apertures 40 and 42 are regularly pitched along the length of the cable tray as Figs. 3 and 4 show. An alternative arrangement with a different aperture type and flanges of a different size as shown in Figures 5 and 6 in which arrangement slots and apertures are dimensioned and arranged so as to enable coupling to take place in the manner described in relation to Figs. 1 to 4. Accordingly, the same reerence numerals have been used in Figs. 5 and 6.

## Claims

1. A cable tray system, wherein at least one cable tray length is provided with evenly pitched apertures in the flanges thereof, and either (i) another cable tray to be connected to said one cable tray is provided with extension tongues for overlapping the cable tray flanges of said first cable tray and having apertures in said tongues to enable the connection of the tongues to the flanges by means of bolts, or (ii) a cable tray accessory is provided with extension tongues for overlapping the flanges of said at least one cable tray and said tongues having apertures therein to enable the connection of the tongues to the flanges by the passing of bolts therethrough, characterised in that the apertures in the tongues are slots dimensioned and arranged such that if the said at least one cable tray is cut to length, regardless of where the cut is made, the slots will still overlap apertures in the flanges of said at least one cable tray, enabling at least one bolt and preferably two bolts to be passed through each overlapping tongues and flanges for the fixing of same together.

2. A cable tray system according to Claim 1, wherein each tongue has a single elongated slot which is of sufficient length to span three apertures in the flange to which it is to be connected whereby regardless of the position of the tongue longitudinally in relation to the flange, it will span two apertures in the flange enabling two bolts to be passed through the tongue and flange for the fixing of the tongue to the flange.

3. A cable tray system according to Claim 1 or 2, wherein an accessory is provided and is adapted at two locations to be connected to respective ends of two cable trays having said apertures in the flanges thereof, at each of said locations, the accessory will have said tongues.

4. A cable tray system according to Claim 3, wherein the accessory has a base plate extension which is adapted to lie under the base of a cable tray connected to said location, said base plate extension having apertures which can register with apertures in the base of the cable tray, enabling the securement of said base extension to the base of the cable tray by the passage of bolts through said apertures.

5. A cable tray system according to Claim 4, wherein the accessory has a base plate and side flanges, the tongues being integral with said side flanges. The base extension plate when provided preferably is displaced out of the plane of the accessory base plate.

6. A cable tray system according to any preceding claim, wherein the cable tray or cable trays and/or the accessory is/are formed in metal such as galvanised steel.

FIG.1

FIG 2.

FIG.3

FIG. 4

FIG. 5

FIG. 6